# EUROPEAN PATENT SPECIFICATION

(11) **EP 4 356 723 B1**
(45) Date of publication and mention of the grant of the patent: **13.08.2025**
(21) Application number: 23200105.7
(22) Date of filing: 27.09.2023
(51) Int. Cl.: A01G 9/24, A01G 13/10

(54) **A BELLOW-SHAPED INSECT NETTING FOR A VENTILATION WINDOW OF A GREENHOUSE AND A GREENHOUSE**
BALGFÖRMIGES INSEKTENNETZ FÜR EIN LÜFTUNGSFENSTER EINES GEWÄCHSHAUSES UND GEWÄCHSHAUS
FILET D'INSECTE EN FORME DE SOUFFLET POUR UNE FENÊTRE DE VENTILATION D'UNE SERRE ET SERRE

(43) Date of publication of application: 24.04.2024
(73) Proprietor: Holland Gaas B.V., 2676 LS Maasdijk (NL)
(72) Inventor: HAARING, Roland, 2693 EE 's-Gravenzande (NL); VAN MARKWIJK, Ronald Wilhelmus, 2685 SJ Poeldijk (NL); VAN GEEST, Willem Seger Gerard, 2673 CH Naaldwijk (NL); SCHULTE, Marcel Johannes Gerardus, 2675 KJ Honselersdijk (NL)
(74) Representative: De Vries & Metman

(56) References cited:
- EP-A1- 2 631 413
- WO-A1-2022/245215
- NL-A- 9 301 836
- NL-C2- 1 007 720
- NL-C2- 1 019 229
- US-A1- 2021 219 502

## Description

The present invention relates to a bellow-shaped insect netting for a ventilation window of a greenhouse, having a folded condition in which the insect netting is compacted and an unfolded condition in which the insect netting forms at least a first wall and a second wall which are angled with respect to each other and meet each other at a corner portion, thus forming an inner side and an outer side of the insect netting, wherein the insect netting comprises a plurality of bellow sections, wherein each bellow section has a first bellow section portion and a second bellow section portion, which are fixed to each other at one of the inner side and the outer side so as to form a plie and lie onto each other in the folded condition, wherein the first bellow section portion comprises a first strip along the first wall and a second strip along the second wall which are fixed to each other through a first seam at mutual rims of the first and second strips of the first bellow section portion which face each other at the corner portion, and the second bellow section portion comprises a first strip along the first wall and a second strip along the second wall which are fixed to each other through a second seam at mutual rims of the first and second strips of the second bellow section portion which face each other at the corner portion.

Such an insect netting is known from WO 2022/245215. In the unfolded condition the known insect netting comprises a front panel which merges into two side panels. The side panels have a shape of a circle section. The insect netting comprises a plurality of U-shaped bellow sections, wherein each of the bellow sections has two parallel side bellow portions at the respective side panels and a front bellow portion at the front panel. Each of the side bellow portions comprises a first side gauze web and a second side gauze web connected to each other at a longitudinal side thereof and each having a short side. The front bellow portion comprises a first front gauze web and a second front gauze web connected to each other at a longitudinal side thereof. The short sides of the first and second side gauze webs are connected to the longitudinal sides of the first and second front gauze webs, respectively.

An object of the invention is to provide an improved bellow-shaped insect netting.

This object is accomplished with the insect netting according to the invention, wherein the first seam and the second seam have different locations at the corner portion as seen in a direction perpendicular to a plane in which the bellow section lies in the folded condition of the insect netting.

An advantage of the insect netting according to the invention is that the thickness of the bellow section at the corner portion is minimized in the folded condition, since the first seam and the second seam are shifted with respect to each other. This causes a relatively flat package of the insect netting in its folded condition.

The fact that the first and second strips of the first bellow section portion are fixed to each other through the first seam at mutual rims of the first and second strips of the first bellow section portion which face each other at the corner portion, means that an overlap of the first and second strips of the first bellow section portion is minimized. Similarly, the fact that the first and second strips of the second bellow section portion are fixed to each other through the second seam at mutual rims of the first and second strips of the first bellow section portion which face each other at the corner portion, means that an overlap of the first and second strips of the second bellow section portion is minimized. The first seam may be a single seam between the first and second strips of the first bellow section portion and the second seam may be a single seam between the first and second strips of the second bellow section portion.

In an embodiment the first seam and the second seam are angled with respect to each other at the corner portion as seen in a direction perpendicular to the plane in which the bellow section lies in the folded condition of the insect netting.

The first wall and the second wall may be substantially perpendicular to each other. This means that the first and second strips of the first bellow section portion are substantially perpendicular to each other and the first and second strips of the second bellow section portion are substantially perpendicular to each other.

In an embodiment at the corner portion a transverse end of the first strip of the first bellow section portion is fixed to a longitudinal side of the second strip of the first bellow section portion, wherein at the corner portion a transverse end of the second strip of the second bellow section portion is fixed to a longitudinal side of the first strip of the second bellow section portion. The transverse end of the first strip of the first bellow section portion may be perpendicular to a longitudinal direction of the first strip of the first bellow section portion and parallel to the longitudinal side of the second strip of the first bellow section portion, whereas the transverse end of the second strip of the second bellow section portion may be perpendicular to a longitudinal direction of the second strip of the second bellow section portion and parallel to the longitudinal side of the first strip of the second bellow section portion. The first and second strips of the first and second bellow section portions may be rectangular. The first and second seam may be perpendicular to each other as seen in a direction perpendicular to the plane in which the bellow section lies in the folded condition of the insect netting.

In a particular embodiment the first bellow section portion is a lower bellow section portion and the second bellow section portion is an upper bellow section portion extending above the upper bellow section portion, wherein the first strip of the upper bellow section portion extends above the first strip of the lower bellow section portion and an end portion of the second strip of the lower bellow section portion, whereas the second strip of the lower bellow section portion extends below the second strip of the upper bellow section portion and an end portion of the first strip of the upper bellow section portion. In this embodiment the first and second bellow section portions lie above each other. The first and second panel may extend in upward direction.

The insect netting may be fused, stitched or adhered at the first and second seams.

The first bellow section portion and the second bellow section portion may be fused, stitched or adhered to each other at one of the inner side and the outer side.

The first and second strips of the first and second bellow section portions are elongated pieces, preferably made of a fine mesh gauze.

In a particular embodiment the bellow section has a U-shape such that the insect netting can be used at a tilt window. The U-shape may fit to three free edges of a rectangular tilt window.

The invention is also related to a greenhouse, comprising an inclined roof including an opening and a ventilation window which is rotatable between a closed condition in which it covers the opening and an open condition in which the opening forms a ventilation passage, wherein the greenhouse further comprises an insect netting as described hereinbefore, which insect netting is mounted to the ventilation window and surrounding edges around the opening.

The invention will hereafter be elucidated with reference to very schematic drawings showing embodiments of the invention by way of example.
Fig. 1 is a perspective view of a part of an embodiment of a greenhouse including an insect netting according to the invention.
Fig. 2 is a pan view of a part of a lower bellow section portion of the insect netting of Fig. 1.
Fig. 3 is a similar view as Fig. 2, but showing a part of an upper bellow section portion of the insect netting of Fig. 1.
Fig. 4 is a perspective view of a part of the insect netting of Fig. 1, illustrating how the upper bellow section portions and the lower bellow section portions are fixed to each other.
Fig. 5 is a cross-sectional view along the line V-V in Fig. 4, when the lower and upper bellow section portions are fixed to each other and in the unfolded condition of the insect netting.
Fig. 6 is an enlarged perspective view of a part of Fig. 1, illustrating the insect netting in an unfolded condition.
Figs. 7 and 8 are similar views as Fig. 4, showing alternative embodiments of the insect netting.

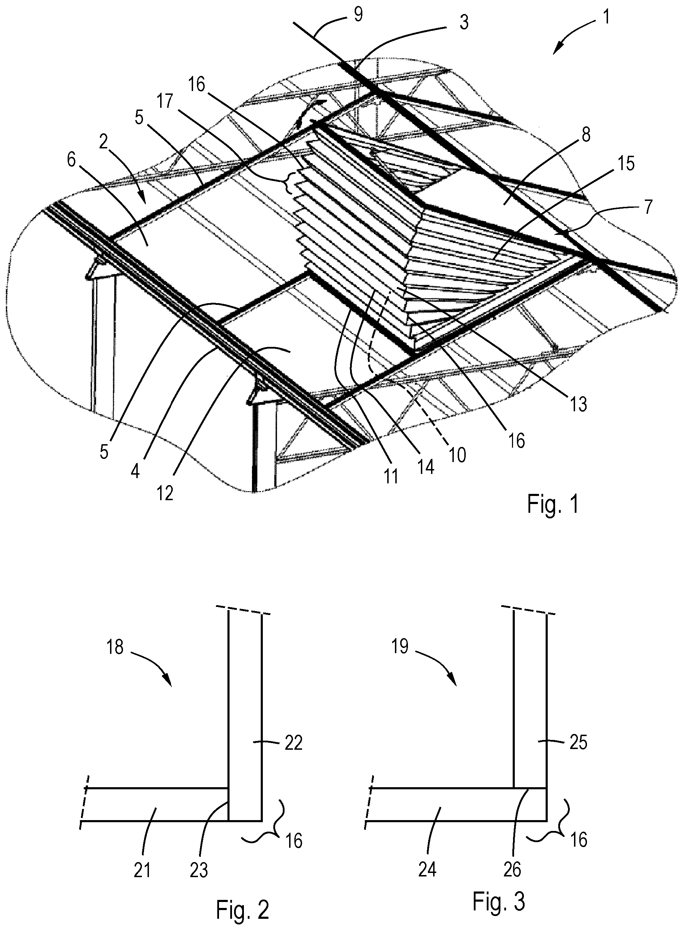

Fig. 1 shows a part of an embodiment of a greenhouse 1 according to the invention. The greenhouse 1 is of the Venlo type and has an inclined roof 2. The roof 2 has a ridge 3 and a gutter 4 which extend parallel to each other. Parallel window profiles 5 extend between the gutter 4 and the ridge 3 and are perpendicular with respect to the gutter 4 and the ridge 3. The ridge 3, the gutter 4 and the window profiles 5 form rectangular rabbets for glass panels 6.

The roof 2 is provided with a ventilation window 7 which comprises a glass panel 8, as well. An upper rim of the ventilation window 7 is pivotally mounted to the ridge 3 such that the ventilation window 7 is rotatable about a pivot axis 9 with respect to the ridge 3.

The ventilation window 7 is rotatable between a closed condition in which it covers a rectangular opening 10 in the roof 2 and an open condition in which the opening 10 forms a ventilation passage. Fig. 1 shows the ventilation window 7 in its open condition. The opening 10 is surrounded by two neighbouring window profiles 5, the ridge 3 and an intermediate rod 11 between the neighbouring window profiles 5. The gutter 4, the neighbouring window profiles 5 and the intermediate rod 11 form a rectangular rabbet for a glass panel 12.

The greenhouse 1 is provided with a bellow-shaped insect netting 13 to prevent insects from entering an inner side of the greenhouse 1 when the ventilation window 7 is in the open condition. The insect netting 13 comprises a fine mesh gauze. It is fixed along free edges of the ventilation window 7 and along cooperating edges around the opening 10. The cooperating edges around the opening 10 are formed by portions of the neighbouring window profiles 5 and the intermediate rod 11. The free edges of the ventilation window 7, i.e. the edges outside the upper rim that is pivotally mounted to the ridge 3, and the cooperating edges around the opening 10 have U shapes, respectively. The insect netting 13 may be fixed to the free edges of the ventilation window 7 and the cooperating edges around the opening 10 through flexible elements such as rubber (not shown).

When the ventilation window 7 is in the closed condition the insect netting 13 is in a folded condition and when the ventilation window 7 is in the open condition the insect netting 13 is in an unfolded condition. The latter condition is shown in Fig. 1. In the folded condition the insect netting 13 is collapsed or compacted and sandwiched between the free edges of the ventilation window 7 and the cooperating edges around the opening 10. In the unfolded condition the insect netting 13 forms a front wall 14 and two opposite side walls 15. Each of the side walls 15 is angled with respect to the front wall 14. In this case the front wall 14 is perpendicular to each of the side walls 15. In the embodiment as shown in Fig. 1 the front wall 14 is curved and the side walls 15 form respective circle sections, since the ventilation window 7 is a tilt window. This may be different in an alternative shape of the ventilation window 7. The front wall 14 meets the side walls 15 at respective corner portions 16. The front wall 14 and the side walls 15 have an inner side of the insect netting 13 which is exposed to an inner side of the greenhouse 1 and an outer side which is exposed to an outer side of the greenhouse 1.

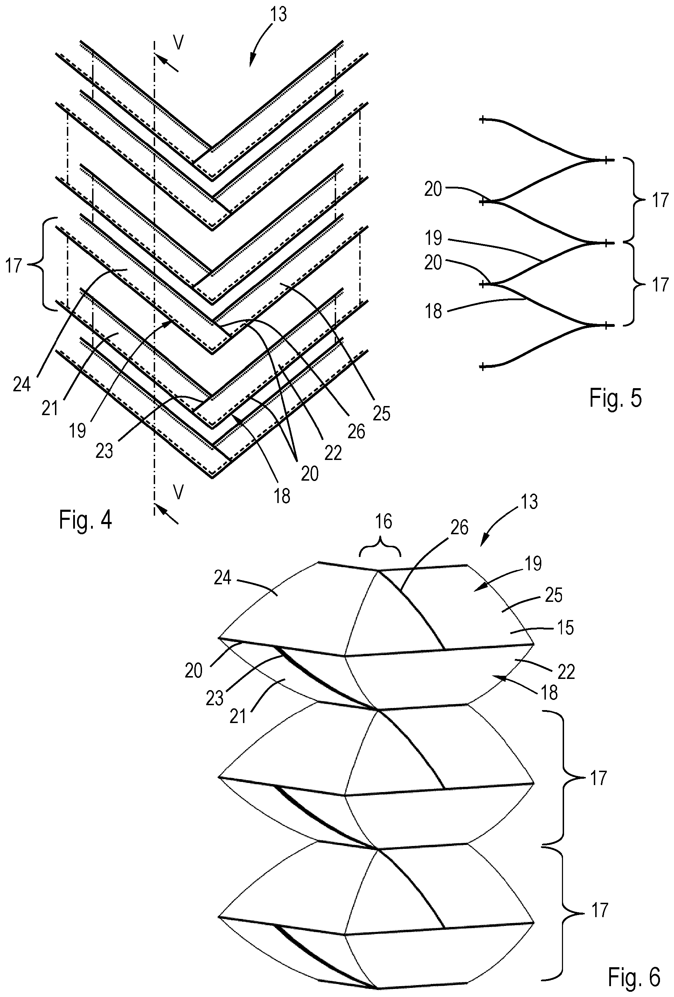

The insect netting 13 comprises a plurality of bellow sections 17 which are arranged above each other in order to form the bellow shape. Each bellow section 17 has a U-shape including a base and two legs, wherein the legs are part of the respective side panels 15 and the base is part of the front panel 14. Figs. 2 and 3 show portions of one bellow section 17. Figs. 4 and 5 show how the bellow sections 17 are fixed to each other. Each bellow section 17 has a lower bellow section portion 18 and an upper bellow section portion 19, which are fixed to each other at the outer side of the insect netting 13 so as to form a plie and lie onto each other in the folded condition. Adjacent bellow sections 17 are fixed to each other at the inner side of the insect netting 13. The fixations at the inner side and the outer side of the insect netting 13 are illustrated by vertical dashdotted lines in Fig. 4.

Fig. 5 shows a cross-section of the bellow sections 17 at the front panel 14 in the unfolded condition, illustrating that each of the bellow sections 17 forms a plie. In this case the upper bellow section portion 19 and the lower bellow section portion 18 are fixed to each other by means of welding, therewith forming a welding area 20 which extends along the bellow section 17. Alternatively, the upper bellow section portion 19 and the lower bellow section portion 18 may be fixed to each other by means of adhesive, stitching, fusing or the like. The bellow sections 17 are fixed to each other at the inner side of the insect netting 13 in a similar way.

Referring to Figs. 2 and 3, the lower bellow section portion 18 comprises a rectangular first strip 21 along the front wall 14 and two parallel rectangular second strips 22 along the respective side walls 15 which meet each other at the respective corner portions 16. The first strip 21 of the lower bellow section portion 18 is fixed to each of the second strips 22 of the lower bellow section portion through respective lower seams 23 at the respective corner portions 16. Similarly, the upper bellow section portion 19 comprises a rectangular first strip 24 along the front wall 14 and two parallel rectangular second strips 25 along the respective side walls 15. The first strip 24 of the upper bellow section portion 19 is fixed to each of the second strips 25 of the upper bellow section portion 19 through respective upper seams 26 at the respective corner portions 16.

At each of the corner portions 16 a transverse end of the first strip 21 of the lower bellow section portion 18 is fixed to a longitudinal side of the second strip 22 of the lower bellow section portion 18 which face each other, whereas a transverse end of the second strip 25 of the upper bellow section portion 19 is fixed to a longitudinal side of the first strip 24 of the upper bellow section portion 19 which face each other. The first strip 21 and the second strip 22 of the lower bellow section portion 18 may be fixed to each other at the lower seam 23 by means of stitching, welding, adhesive, fusing or the like. Similarly, the first strip 24 and the second strip 25 of the upper bellow section portion 19 may be fixed to each other at the upper seam 26 by means of stitching, welding, adhesive, fusing or the like.

Referring to Fig. 4, the first strip 24 of the upper bellow section portion 19 extends above the first strip 21 of the lower bellow section portion 18 and an end portion of the second strip 22 of the lower bellow section portion 18, whereas the second strip 22 of the lower bellow section portion 18 extends below the second strip 25 of the upper bellow section portion 19 and an end portion of the first strip 24 of the upper bellow section portion 19.

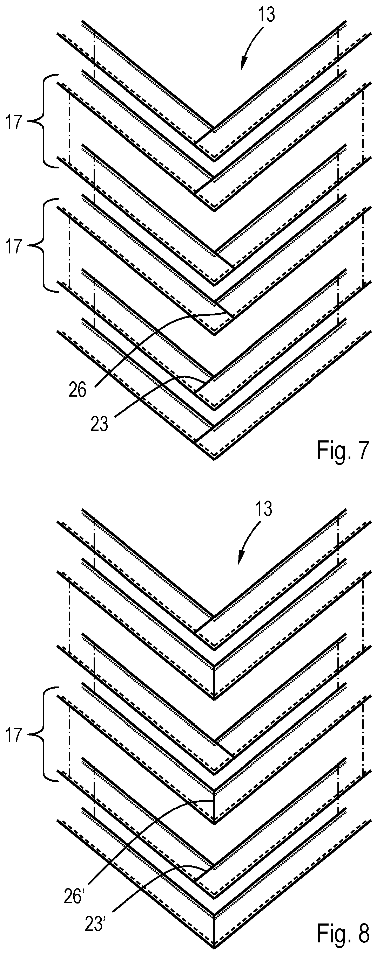

Fig. 6 shows a portion of the insect netting 13 at one of the corner portions 16 in its unfolded condition. Since the upper and lower seams 23, 26 of each of the successive bellow sections 17 are not placed onto each other in the folded condition the ventilation window 7 can close evenly on the edges around the opening 10 of the roof 2. It is noted that in Fig. 6 neighbouring bellow sections 17 are the same at the corner portion 16, i.e. the lower seam 23 at the lower bellow section portions 18 lie at the same location of each of the bellow sections 17 at the corner portion 16 and the upper seam 26 at the upper bellow section portion 19 lie at the same location of each of the bellow sections 17 at the corner portion 16. This may be different in an alternative embodiment. This is illustrated in the embodiment as shown in Fig. 7, which still has a bellow section 17 in which the lower seam 23 and the upper seam 26 have different locations at the corner portion 16 as seen in a direction perpendicular to a plane in which the bellow section 17 lies in the folded condition of the insect netting 13.

Fig. 8 shows another alternative embodiment, which has a bellow section 17 in which the lower seam 23' and the upper seam 26' are not perpendicular to each other, but which still have different locations and orientations at the corner portion 16 as seen in a direction perpendicular to a plane in which the bellow section 17 lies in the folded condition of the insect netting 13.

The invention is not limited to the embodiments shown in the drawings and described hereinbefore, but to the scope of the appended claims.

## Claims

1. A bellow-shaped insect netting (13) for a ventilation window (7) of a greenhouse (1), having a folded condition in which the insect netting (13) is compacted and an unfolded condition in which the insect netting (13) forms at least a first wall (14) and a second wall (15) which are angled with respect to each other and meet each other at a corner portion (16), thus forming an inner side and an outer side of the insect netting (13), wherein the insect netting (13) comprises a plurality of bellow sections (17), wherein each bellow section (17) has a first bellow section portion (18) and a second bellow section portion (19), which are fixed to each other at one of the inner side and the outer side so as to form a plie and lie onto each other in the folded condition, wherein the first bellow section portion (18) comprises a first strip (21) along the first wall (14) and a second strip (22) along the second wall (15) which are fixed to each other through a first seam (23, 23') at mutual rims of the first and second strips (21, 22) of the first bellow section portion (18) which face each other at the corner portion (16), and the second bellow section portion (19) comprises a first strip (24) along the first wall (14) and a second strip (25) along the second wall (15) which are fixed to each other through a second seam (26, 26') at mutual rims of the first and second strips (24, 25) of the second bellow section portion (19) which face each other at the corner portion (16), **characterized in that** the first seam (23, 23') and the second seam (26, 26') have different locations at the corner portion (16) as seen in a direction perpendicular to a plane in which the bellow section (17) lies in the folded condition of the insect netting (13).

2. A bellow-shaped insect netting (13) according to claim 1, wherein the first seam (23, 23') and the second seam (26, 26') are angled with respect to each other at the corner portion (16) as seen in a direction perpendicular to the plane in which the bellow section (17) lies in the folded condition of the insect netting (13).

3. A bellow-shaped insect netting (13) according to claim 1 or 2, wherein the first wall (14) and the second wall (15) are substantially perpendicular to each other.

4. A bellow-shaped insect netting (13) according to claim 3, wherein at the corner portion (16) a transverse end of the first strip (21) of the first bellow section portion (18) is fixed to a longitudinal side of the second strip (22) of the first bellow section portion (18), wherein at the corner portion (16) a transverse end of the second strip (25) of the second bellow section portion (19) is fixed to a longitudinal side of the first strip (24) of the second bellow section portion (19).

5. A bellow-shaped insect netting (1) according to claim 4, wherein the first bellow section portion is a lower bellow section portion (18) and the second bellow section portion is an upper bellow section portion (19) extending above the lower bellow section portion (18), wherein the first strip (24) of the upper bellow section portion (19) extends above the first strip (21) of the lower bellow section portion (18) and an end portion of the second strip (22) of the lower bellow section portion (18), whereas the second strip (22) of the lower bellow section portion (18) extends below the second strip (25) of the upper bellow section portion (19) and an end portion of the first strip (24) of the upper bellow section portion (19).

6. A bellow-shaped insect netting (13) according to any one of the preceding claims, wherein the insect netting (13) is fused, stitched or adhered at the first and second seams (23, 23', 26, 26').

7. A bellow-shaped insect netting (13) according to any one of the preceding claims, wherein the first bellow section portion (18) and the second bellow section portion (19) are fused, stitched or adhered to each other at one of the inner side and the outer side.

8. A bellow-shaped insect netting (13) according to any one of the preceding claims, wherein the first and second strips (21, 22, 24, 26) of the first and second bellow section portions (18, 19) are elongated pieces, preferably made of a fine mesh gauze.

9. A bellow-shaped insect netting (13) according to any one of the preceding claims, wherein the bellow section (17) has a U-shape.

10. A greenhouse (1), comprising an inclined roof (2) including an opening (10) and a ventilation window (7) which is rotatable between a closed condition in which it covers the opening (10) and an open condition in which the opening (10) forms a ventilation passage, wherein the greenhouse (1) further comprises an insect netting (13) according to any one of the preceding claims, which is mounted to the ventilation window (7) and surrounding edges around the opening (10).

## Patentansprüche

1. Balgförmiges Insektennetz (13) für ein Lüftungsfenster (7) eines Gewächshauses (1), welches einen gefaltet-Zustand, in welchem das Insektennetz (13) kompakt gemacht ist, und einen entfaltet-Zustand hat, in welchem das Insektennetz (13) mindestens eine erste Wand (14) und eine zweite Wand (15) bildet, die relativ zueinander winkelig sind und sich an einem Eckabschnitt (16) treffen, dadurch eine Innenseite und eine Außenseite des Insektennetzes (13) bildend, wobei das Insektennetz (13) mehrere Balgabschnitte (17) aufweist, wobei jeder Balgabschnitt (17) einen ersten Balgabschnittteil (18) und einen zweiten Balgabschnittteil (19) hat, die an der Innenseite oder der Außenseite so aneinander befestigt sind, dass sie eine Falte bilden und im gefaltet-Zustand aufeinander liegen, wobei der erste Balgabschnittteil (18) einen ersten Streifen (21) entlang der ersten Wand (14) und einen zweiten Streifen (22) entlang der zweiten Wand (15) aufweist, die an gegenseitigen Rändern des ersten und des zweiten Streifens (21, 22) des ersten Balgabschnittteils (18), die an dem Eckabschnitt (16) einander zugewandt sind, mittels einer ersten Naht (23, 23') aneinander befestigt sind, und der zweite Balgabschnittteil (19) einen ersten Streifen (24) entlang der ersten Wand (14) und einen zweiten Streifen (25) entlang der zweiten Wand (15) aufweist, die an gegenseitigen Rändern des ersten und des zweiten Streifens (24, 25) des zweiten Balgabschnittteils (19), die an dem Eckabschnitt (16) einander zugewandt sind, mittels einer zweiten Naht (26, 26') aneinander befestigt sind, **dadurch gekennzeichnet, dass** die erste Naht (23, 23') und die zweite Naht (26, 26') an dem Eckabschnitt (16) unterschiedliche Positionen haben, gesehen in einer Richtung senkrecht zu einer Ebene, in welcher der Balgabschnitt (17) im gefaltet-Zustand des Insektennetzes (13) liegt.

2. Balgförmiges Insektennetz (13) gemäß Anspruch 1, wobei die erste Naht (23, 23') und die zweite Naht (26, 26') an dem Eckabschnitt (16) zueinander winkelig sind, gesehen in einer Richtung senkrecht zu der Ebene, in welcher der Balgabschnitt (17) im gefaltet-Zustand des Insektennetzes (13) liegt.

3. Balgförmiges Insektennetz (13) gemäß Anspruch 1 oder 2, wobei die erste Wand (14) und die zweite Wand (15) im Wesentlichen senkrecht zueinander sind.

4. Balgförmiges Insektennetz (13) gemäß Anspruch 3, wobei an dem Eckabschnitt (16) ein quer verlaufendes Ende des ersten Streifens (21) des ersten Balgabschnittteils (18) an einer Längsseite des zweiten Streifens (22) des ersten Balgabschnittteils (18) befestigt ist, wobei an dem Eckabschnitt (16) ein Querende des zweiten Streifens (25) des zweiten Balgabschnittteils (19) an einer Längsseite des ersten Streifens (24) des zweiten Balgabschnittteils (19) befestigt ist.

5. Balgförmiges Insektennetz (1) gemäß Anspruch 4, wobei der erste Balgabschnittteil ein unterer Balgabschnittteil (18) ist und der zweite Balgabschnittteil ein oberer Balgabschnittteil (19) ist, der sich über dem unteren Balgabschnittteil (18) erstreckt, wobei sich der erste Streifen (24) des oberen Balgabschnittteils (19) über dem ersten Streifen (21) des unteren Balgabschnittteils (18) und einem Endabschnitt des zweiten Streifens (22) des unteren Balgabschnittteils (18) erstreckt, wobei sich der zweite Streifen (22) des unteren Balgabschnittteils (18) unter dem zweiten Streifen (25) des oberen Balgabschnittteils (19) und einem Endabschnitt des ersten Streifens (24) des oberen Balgabschnittteils (19) erstreckt.

6. Balgförmiges Insektennetz (13) gemäß irgendeinem der vorstehenden Ansprüche, wobei das Insektennetz (13) an der ersten und der zweiten Naht (23, 23', 26, 26') verschmolzen, vernäht oder verklebt ist.

7. Balgförmiges Insektennetz (13) gemäß irgendeinem der vorstehenden Ansprüche, wobei der erste Balgabschnittteil (18) und der zweite Balgabschnittteil (19) an einer von der Innenseite und der Außenseite miteinander verschmolzen, vernäht oder verklebt sind.

8. Balgförmiges Insektennetz (13) gemäß irgendeinem der vorstehenden Ansprüche, wobei der erste und der zweite Streifen (21, 22, 24, 26) des ersten und des zweiten Balgabschnittteils (18, 19) längliche Stücke sind, die vorzugsweise aus einem feinmaschigen Gewebe gemacht sind.

9. Balgförmiges Insektennetz (13) gemäß irgendeinem der vorstehenden Ansprüche, wobei der Balgabschnitt (17) eine U-Form aufweist.

10. Gewächshaus (1), aufweisend ein geneigtes Dach (2), das eine Öffnung (10) und ein Lüftungsfenster (7) aufweist, das zwischen einem geschlossen-Zustand, in welchem es die Öffnung (10) abdeckt, und einem offen-Zustand, in welchem die Öffnung (10) einen Lüftungsdurchgang bildet, drehbar ist, wobei das Gewächshaus (1) ferner ein Insektennetz (13) gemäß irgendeinem der vorstehenden Ansprüche aufweist, das an dem Lüftungsfenster (7) und Umfangsrändern um die Öffnung (10) herum angebracht ist.

## Revendications

1. Moustiquaire en forme de soufflet (13) pour une fenêtre de ventilation (7) d'une serre (1), présentant un état plié dans lequel la moustiquaire (13) est compactée et un état déplié dans lequel la moustiquaire (13) forme au moins une première paroi (14) et une seconde paroi (15) qui sont inclinées l'une par rapport à l'autre et se rejoignent au niveau d'une partie d'angle (16), formant ainsi un côté intérieur et un côté extérieur de la moustiquaire (13), dans laquelle la moustiquaire (13) comprend une pluralité de sections de soufflet (17), dans laquelle chaque section de soufflet (17) présente une première partie de section de soufflet (18) et une seconde partie de section de soufflet (19), qui sont fixées l'une à l'autre au niveau de l'un du côté intérieur et du côté extérieur de manière à former un pli et reposer l'une sur l'autre dans l'état plié, dans laquelle la première partie de section de soufflet (18) comprend une première bande (21) le long de la première paroi (14) et une seconde bande (22) le long de la seconde paroi (15) qui sont fixées l'une à l'autre au moyen d'une première couture (23, 23') au niveau des bords réciproques des première et seconde bandes (21, 22) de la première partie de section de soufflet (18) qui se font face au niveau de la partie d'angle (16), et la seconde partie de section de soufflet (19) comprend une première bande (24) le long de la première paroi (14) et une seconde bande (25) le long de la seconde paroi (15) qui sont fixées l'une à l'autre au moyen d'une seconde couture (26, 26') au niveau des bords réciproques des première et seconde bandes (24, 25) de la seconde partie de section de soufflet (19) qui se font face au niveau de la partie d'angle (16), **caractérisée en ce que** la première couture (23, 23') et la seconde couture (26, 26') présentent des emplacements différents au niveau de la partie d'angle (16) en vue dans une direction perpendiculaire à un plan dans lequel la section de soufflet (17) repose dans l'état plié de la moustiquaire (13).

2. Moustiquaire en forme de soufflet (13) selon la revendication 1, dans laquelle la première couture (23, 23') et la seconde couture (26, 26') sont inclinées l'une par rapport à l'autre au niveau de la partie d'angle (16) en vue dans une direction perpendiculaire au plan dans lequel la section de soufflet (17) repose dans l'état plié de la moustiquaire (13).

3. Moustiquaire en forme de soufflet (13) selon la revendication 1 ou 2, dans laquelle la première paroi (14) et la seconde paroi (15) sont sensiblement perpendiculaires l'une à l'autre.

4. Moustiquaire en forme de soufflet (13) selon la revendication 3, dans laquelle, au niveau de la partie d'angle (16), une extrémité transversale de la première bande (21) de la première partie de section de soufflet (18) est fixée à un côté longitudinal de la seconde bande (22) de la première partie de section de soufflet (18), dans laquelle, au niveau de la partie d'angle (16), une extrémité transversale de la seconde bande (25) de la seconde partie de section de soufflet (19) est fixée à un côté longitudinal de la première bande (24) de la seconde partie de section de soufflet (19).

5. Moustiquaire en forme de soufflet (1) selon la revendication 4, dans laquelle la première partie de section de soufflet est une partie de section de soufflet inférieure (18) et la seconde partie de section de soufflet est une partie de section de soufflet supérieure (19) s'étendant au-dessus de la partie de section de soufflet inférieure (18), dans laquelle la première bande (24) de la partie de section de soufflet supérieure (19) s'étend au-dessus de la première bande (21) de la partie de section de soufflet inférieure (18) et d'une partie d'extrémité de la seconde bande (22) de la partie de section de soufflet inférieure (18), tandis que la seconde bande (22) de la partie de section de soufflet inférieure (18) s'étend sous la seconde bande (25) de la partie de section de soufflet supérieure (19) et une partie d'extrémité de la première bande (24) de la partie de section de soufflet supérieure (19).

6. Moustiquaire en forme de soufflet (13) selon l'une quelconque des revendications précédentes, dans laquelle la moustiquaire (13) est soudée, piquée ou collée au niveau des première et seconde coutures (23, 23', 26, 26').

7. Moustiquaire en forme de soufflet (13) selon l'une quelconque des revendications précédentes, dans laquelle la première partie de section de soufflet (18) et la seconde partie de section de soufflet (19) sont soudées, piquées ou collées l'une à l'autre sur l'un du côté intérieur et du côté extérieur.

8. Moustiquaire en forme de soufflet (13) selon l'une quelconque des revendications précédentes, dans laquelle les première et seconde bandes (21, 22, 24, 26) des première et seconde parties de section de soufflet (18, 19) sont des morceaux allongés, de préférence en gaze à mailles fines.

9. Moustiquaire en forme de soufflet (13) selon l'une quelconque des revendications précédentes, dans laquelle la section de soufflet (17) présente une forme en U.

10. Serre (1), comprenant un toit incliné (2) comportant une ouverture (10) et une fenêtre de ventilation (7) qui est pivotante entre un état fermé dans lequel elle recouvre l'ouverture (10) et un état ouvert dans lequel l'ouverture (10) forme un passage de ventilation, dans laquelle la serre (1) comprend en outre une moustiquaire (13) selon l'une quelconque des revendications précédentes, qui est montée sur la fenêtre de ventilation (7) et les bords environnants autour de l'ouverture (10).
